# EUROPÄISCHE PATENTANMELDUNG

(11) **EP 1 278 213 A1**
(43) Veröffentlichungstag der Anmeldung: **22.01.2003**
(21) Anmeldenummer: 01810716.9
(22) Anmeldetag: 19.07.2001
(51) Int. Cl.: H01B 3/46, C08L 83/04

(54) **Härtbare Silikonharzmassen für die Herstellung von selbst heilenden elektrischen Isolierungen**

(71) Anmelder: ABB RESEARCH LTD., 8050 Zürich (CH)
(72) Erfinder: Rocks, Jens, 8057 Zürich (CH); Kluge-Weiss, Petra, 5405 Dättwil (CH); Kessler, Reto, 8004 Zürich (CH); Schmid, Veronika, 5400 Baden (CH)
(74) Vertreter: ABB Patent Attorneys

(57) **Zusammenfassung**

Härtbare flüssige oder pastöse Silikonharzmasse, welche für die Herstellung von selbst heilenden elektrischen Isolierungen geeignet ist, welche dadurch gekennzeichnet ist, dass diese in gleichmässiger Verteilung mindestens ein niedermolekulares lineares oder verzweigtes Organopolysiloxan, oder ein Gemisch solcher Organopolysiloxane, in einer wirksamen Konzentration enthält.

## Beschreibung

### Geltungsbereich

Die vorliegende Erfindung betrifft härtbare Silikonharzmassen für die Herstellung von selbst heilenden elektrischen Isolierungen, insbesondere in Form von Formteilen und Beschichtungen auf dem Gebiet der Hochspannungsisolierungen für den Freilufteinsatz, sowie die erfindungsgemäss hergestellten elektrischen Isolierungen.

### Technisches Gebiet

Hochspannungsisolierung auf Basis polymerer Silkonharze für den Freilufteinsatz sind an sich bekannt. Für Freiluftanwendungen werden traditionell Isolatoren auf Basis der Materialien Glas und/oder Keramik eingesetzt. In den letzten Jahren konnten polymere Isolierstoffe ebenfalls einen stetig steigenden Marktanteil erringen. Dabei kommen Freiluftisolatoren in grossen Stückzahlen bei Hochspannungsleitungen als Langstabisolatoren, Verbundisolatoren und Kappenisolatoren zum Einsatz. Im Mittelspannungsbereich werden vor allem als Stützisolatoren eingesetzt. Weitere Anwendungsgebiete sind Freiluft-Leistungschalter, Messwandler, Durchführungen und Ableiter. Auch im Schaltanlagenbau, wo die mechanische Festigkeit im Vordergrund steht, jedoch eine elektrische Isolation notwendig ist, werden viele isolierende Formteile benötigt. Produkte in diesem Bereich sind beispielsweise Messwandler, Durchführungen, Trockentransformatoren und elektrische Maschinen.

In den letzten Jahren wurden vermehrt polymere Werkstoffe, wie zum Beispiel Silikone (RTV, HTV, LSR) sowie Ethylen-Propylen-Gummi (EPR, EPDM) oder Giessharzsysteme auf Basis von Epoxidharzen und Polyurethanen eingesetzt. Allgemeine technische Akzeptanz haben jedoch nur Silikone erreicht, was mit den für Silikone typischen Eigenschaften, wie Hydrophobie, Hydrophobietransfer durch Fremdschichten und Hydrophobiewiedekehr nach temporärem Verlust zu erklären ist.

Isolatoren auf Basis von Glas und/oder Keramik oder auch auf der Basis von Verbundwerkstoffen, werden in der Regel mit geeigneten Silikonharzen beschichtet. Kommt es zur Betauung der elektrisch isolierenden Oberfläche, so ist deren isolierende Wirkung wesentlich von deren wasserabweisenden Wirkung (Hydrophobie) abhängig. Bei stark hydrophoben Oberflächen, wie sie in der Regel bei Silikonen auftreten, bilden sich Taubeläge in Form einzelner, voneinander getrennter Tröpfchen aus, so dass die elektrisch isolierende Wirkung weitgehend erhalten bleibt. Insbesondere bei der Freiluftanwendung tritt jedoch infolge der Umwelteinflüsse eine langsame Alterung der elektrisch isolierenden Oberfläche auf.

Diesen Alterungsvorgang kann man in eine Alterungsfrühphase und eine Alterungsspätphase einteilen, wobei das Ende der Alterungsfrühphase mit dem partiellen Verlust der Hydrophobie einher geht. Mit dem Hydrophobieverlust kommt es schlussendlich zur Bildung eines vollständig benetzenden Wasserfilms auf der Isoiatoroberfläche, falls sich diese in einer feuchten Umgebung befindet. Durch diesen Filmbelag fliessen deutlich erhöhte Ströme, welche gegebenenfalls zu Überschlägen des Isolators führen können, jedenfalls aber eine beschleunigte thermische und/oder oxidative Schädigung der Polymermatrix verursachen und so eine beschleunigte Alterung der Isolation in der Alterungsspätphase bewirken.

Besitzt die elektrisch isolierende Schicht ein genügendes Mass an Hydrophobieerholung, so bewirkt diese Erholung, dass bereits in der Alterungsfrühphase die elektrische Isolationswirkung der Oberfläche wieder hergestellt wird. Bei der Anwendung einer Korona-Entladung auf einer konventionellen Silikonoberfläche, nimmt aber die Hydrophobieerholung deutlich ab. Es besteht deshalb ein Bedürfnis, die Hydrophobieerholung von elektrischen Isolierungen auf der Basis von Silikonharzen zu verbessern bzw. zu beschleunigen. Kommt es nämlich zwischen dem Erreichen des Endes der Alterungsfrühphase und der thermisch-oxidativen Alterung der Spätphase zu einer möglichst schnellen Wiederkehr der Hydrophobie, so kann der Alterungsprozess gestoppt oder zumindest verlangsamt werden, was wiederum die Lebenserwartung von Produkten, welche solche Materialien enthalten, wesentlich verlängert.

### Stand der Technik

Härtbare Silikonharzmassen für die Herstellung von elektrischen Isolierungen, insbesondere in Form von Formteilen und Beschichtungen, auf dem Gebiet der Hochspannungsisolierungen für den Freilufteinsatz sind an sich bekannt. Solche Isolierungen sind in zahlreichen Publikationen beschrieben worden, beispielsweise in EP 0 808 868, EP 0 787 772 oder EP 0 218 461.

### Darstellung der Erfindung

Es wurde nun gefunden, dass härtbare Silikonharzmassen eine ausgezeichnete Hydrophobie und insbesondere eine ausgeprägte Hydrophobiewiederkehr aufweisen, wenn diese härtbaren Silikonharzmassen mindestens ein niedermolekulares lineares oder verzweigtes Organopolysiloxan in einer wirksamen Konzentration enthalten und dieses niedermolekulare Organopolysiloxan eine Viskosität aufweist, die vorzugsweise im Bereich von 0.25 cSt bis 20'000 cSt liegt.

Solche niedermolekulare lineare oder verzweigte Organopolysiloxane lösen sich ausgezeichnet sowohl in den härtbaren flüssigen oder pastösen Silikonharzmassen als auch in den ausgehärteten Massen, ohne in merklichen Anteilen vom Innern an die Oberfläche zu diffundieren bzw. auszuschwitzen. Sie diffundieren hingegen an der unmittelbaren Oberfläche und durchdringen diese. Sie können auch in allfällig an der Oberfläche gebildete Fremdschichten penetrieren, so dass mit dem oxydativen und/oder thermischen Abbau der Oberfläche jeweils eine Wiederherstellung der Hydrophobie bzw. eine Selbstheilung einher geht. Dieser Prozess der Selbstheilung setzt sich so lange fort, als die der Erosion ausgesetzte Oberfläche aus der erfindungsgemässen Vergussmasse besteht.

Die vorliegende Erfindung ist in den Patentansprüchen definiert. Insbesondere betrifft die vorliegende Erfindung eine härtbare flüssige oder pastöse Silikonharzmasse bzw. Vergussmasse, welche für die Herstellung von selbst heilenden elektrischen Isolierungen geeignet und dadurch gekennzeichnet ist, dass diese Silikonharzmasse in gleichmässiger Verteilung mindestens ein niedermolekulares lineares oder verzweigtes Organopolysiloxan, oder ein Gemisch solcher Organopolysiloxane, in einer wirksamen Konzentration enthält. Die wirksame Konzentration liegt vorzugsweise im Bereich von 0.5 Gew.-% bis 15 Gew.-%, bezogen auf das Gesamtgewicht der härtbaren Silikonharzmasse. Vorzugsweise liegt die Viskosität dieses niedermolekularen Organopolysiloxans im Bereich von etwa 0.25 cSt bis etwa 20'000 cSt, wie dies im weiteren beschrieben ist.

Die erfindungsgemässe Vergussmasse ist vorzugsweise für die Herstellung von Formteilen und Beschichtungen auf dem Gebiet der elektrischen Isolierungen, insbesondere Hochspannungsisolierungen, insbesondere für den Freilufteinsatz, geeignet.

In diesem Sinne betrifft die vorliegende Erfindung die Verwendung der erfindungsgemässen Vergussmasse für die Herstellung von Formteilen und Beschichtungen auf dem Gebiet der elektrischen Isolierungen, insbesondere für Hochspannungsisolierungen, und insbesondere für Hochspannungsisolierungen für den Freilufteinsatz.

Die Erfindung betrifft im weiteren die aus der erfindungsgemässen Vergussmasse hergestellten elektrischen Isolierungen.

Die Erfindung betrifft im weiteren ein Verfahren zur Herstellung der erfindungsgemässen Vergussmasse.

Härtbare flüssige oder pastöse Silikonharzmassen, welche für die Herstellung von elektrischen Isolierungen, insbesondere Hochspannungsisolierungen, geeignet sind, sind an sich bekannt. Diese können praktisch alle gemäss der vorliegenden Erfindung eingesetzt werden, insofern diese erfindungsgemäss ein niedermolekulares lineares oder verzweigtes Organopolysiloxan, oder ein Gemisch solcher Organopolysiloxane, in einer wirksamen Konzentration enthalten.

Härtbare flüssige oder pastöse Silikonharzmassen im Sinne der vorliegenden Erfindung enthalten in der Regel mindestens ein härtbares Silikonpolymer oder ein Gemisch solcher Polymere, ein Füllmaterial, ein Mittel für die Vernetzung bzw. Härtung der flüssigen oder pastösen Silikonharzmasse, sowie gegebenenfalls weitere Zusatzstoffe.

Vorzugsweise handelt es sich bei dem härtbare Silikonpolymer um ein Gemisch von Organopolysiloxanen, das heisst um eine Verbindung bzw. ein Verbindungsgemisch, der allgemeinen Formel (I): 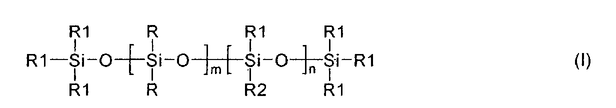 worin
- R: unabhängig voneinander einen gegebenenfalls chlorierten und/oder fluorierten Alkylrest mit 1 bis 4 Kohlenstoffatomen oder Phenyl; vorzugsweise Methyl, Ethyl, Propyl, 3,3,3-Trifluoropropyl, Monofluoromethyl, oder Difluoromethyl; vorzugsweise Methyl;
- R₁: unabhängig voneinander eine der Bedeutungen von R oder R₂, oder -O-Alkyl(C₁-C₄) oder Hydroxyl;
- R₂: unabhängig voneinander eine der Bedeutungen von R, oder Wasserstoff, oder einen Rest -(A)ᵣ-CH=CH₂;
- A: einen Rest -CₛH₂ₛ- , vorzugsweise-(CH₂)ₛ-, worin
- s: eine ganze Zahl von 1 bis 3, vorzugsweise 1;
- r: Null oder eins;
- m: eine Zahl im Bereich von 500 bis 20'000, vorzugsweise im Bereich von 1000 bis 15'000, vorzugsweise im Bereich von 4'000 bis 10'000;
- n: eine Zahl im Bereich von Null bis 500, vorzugsweise im Bereich von Null oder im Bereich von 2 bis 100, vorzugsweise Null oder eine Zahl im Bereich von 2 bis 20;
bedeuten, wobei die Gruppen -[Si(R)(R)O]- und -[Si(R₁)(R₂)O]- in beliebiger Reihenfolge im Molekül angeordnet sind.

Vorzugsweise hat R₂ eine der Bedeutungen von R, wobei R vorzugsweise Methyl oder Phenyl bedeutet, und im Molekül sowohl Methyl als auch Phenyl anwesend sein können. Das Verhältnis von Methyl zu Phenyl ist durch die Fliessfähigkeit der Verbindung bzw. des Verbindungsgemisches und den Eigenschaften des gehärteten Gemisches vorgegeben. Vorzugsweise bedeutet R Methyl. Die Verbindung der Formel (I) stellt in der Regel ein Gemisch von homologen Verbindungen der Formel (I) dar, was dem Fachmann bekannt ist. Vorzugsweise hat mindestens ein Teil der anwesenden Substituenten R₁ die Bedeutung von -O-Alkyl(C₁-C₄) oder Hydroxyl oder von -(A)ᵣ-CH=CH₂.

In einer Ausführungsform der vorliegenden Erfindung bedeutet R₂ sowohl Wasserstoff als auch -A-CH=CH₂, wobei R₂ pro Molekül nur entweder Wasserstoff oder -A-CH=CH₂ bedeutet. Dabei bewahrt man die eine Verbindung, worin R₂ Wasserstoff bedeutet und die andere Verbindung, worin R₂ -A-CH=CH₂ bedeutet, separat auf und vermischt beide Verbindungen erst kurz vor der Härtung. Die beiden Verbindungen mischt man in äquimolaren Mengen und härtet anschliessend aus. Vorzugsweise verwendet man jedoch die Si-H-Gruppen enthaltende Verbindung im molaren Überschuss von 2 bis 5% bezogen auf die den Rest -A-CH=CH₂ enthaltende Komponente. Dabei verwendet man zusätzlich vorzugsweise eine katalytisch wirksame Komplexverbindung aus der Gruppe der Rhodium-, Nickel-, Palladium- und/oder Platinmetalle, in Mengen von vorzugsweise 1 bis 100 ppm bezogen auf gebundenes Platin. Solche katalytisch wirkenden Verbindungen und die zu verwendenden Silikonverbindungen der Formel (I) sind ausführlich in der Literatur beschrieben und sind dem Fachmann bekannt.

Als Mittel für die Vernetzung bzw. Härtung der Silikonharzmasse verwendet man vorzugsweise ein Trialkoxysilan der Formel [(C₁-C₄)Alkyl]Si[O-Alkyl(C₁-C₄)], wie beispielsweise Methyltrimethoxysilan, Methyltriethoxysilan und verwandte Verbindungen, Verbindungen der Formel [(C₂-C₄)Alkenyl]Si[O-Alkyl(C₁-C₄)], wie Vinyltrimethoysilan oder Allyltrimethoysilan, (Phenyl)Si[O-Alkyl(C₁-C₄)] oder Silane der Formel [(C₁-C₄)Alkyl]SiH₃ oder verwandte niedermolekulare Hydrogensiloxane. Ebenso kann man für die Härtung der Komponenten Peroxide einsetzen, wie beispielsweise Diacylperoxide, Dialkylperoxide und andere an sich bekannte Peroxide. In der Regel vernetzt man jeweils bei erhöhter Temperatur. Diese Verfahren sind vielfach beschrieben worden und sind dem Fachmann bekannt.

Die härtbare flüssige oder pastöse Silikonharzmasse kann Zusatzstoffe enthalten. Solche Zusatzstoffe sind beispielsweise Füllmaterialien, Fliesshilfsmittel, Flammschutzmittel oder Farbstoffe bzw. Pigmente.

Als Füllmaterialien verwendet man zum Beispiel Quarz, Calzium Karbonat, Magnesium Silikat, Magnesium Aluminium Silikate, feinteiliges Siliziumoxid [hochdisperse (pyrogene) Kieselsäure (Aerosil)] oder feinteiliges Aluminiumhydroxid mit Oberflächen (BET) im Bereich von 50 m²/g bis 400 m²/g. Die Füllmaterialien können gegebenenfalls mit einem Silan oder niedermolekularen Siloxanen behandelt sein.

Fliesshilfsmittel sind beispielsweise Magnesium Stearat und verwandte Verbindungen. Flammschutzmittel und Farbstoffe sind an sich bekannt.

Härtbare flüssige oder pastöse Silikonharzmassen als Vergussmassen für die Herstellung von Formteilen und Beschichtungen auf dem Gebiet der elektrischen Isolierungen, insbesondere Hochspannungsisolierungen, insbesondere für den Freilufteinsatz, sind kommerziell beispielsweise unter den Handelnamen Powersil® (Wacker-Chemie, Deutschland), Silopren® (GE-Bayer Silicones, Deutschalnd) erhältlich. Diesen Vergussmassen kann vor der Härtung in gleichmässiger Verteilung mindestens ein niedermolekulares lineares oder verzweigtes Organopolysiloxan, oder ein Gemisch solcher Organopolysiloxane, beigefügt werden, wie dies in den folgenden Abschnitten beschrieben ist.

Die Silikonharzmasse gemäss der vorliegenden Erfindung enthält in gleichmässiger Verteilung mindestens ein niedermolekulares lineares oder verzweigtes Organopolysiloxan, oder ein Gemisch solcher Organopolysiloxane. Diese Organopolysiloxane enthalten als organische Substituenten, welche an das Siliziumatom gebunden sind, vorzugsweise gegebenenfalls fluorierte und/oder chlorierte (C₁-C₄)Alkylreste oder Phenyl; vorzugsweise Methyl, Ethyl, Propyl, 3,3,3-Trifluoropropyl, Monofluoromethyl, Difluoromethyl oder Phenyl, vorzugsweise Methyl. Bevorzugt sind lineare Dimethylsiloxane, worin gegebenenfalls ein Teil der Methylgruppen durch Phenyl ersetzt ist.

Vorzugsweise handelt es sich bei diesen niedermolekularen linearen oder verzweigten Organopolysiloxanen um eine Verbindung, bzw. um ein Verbindungsgemisch, der allgemeinen Formel (II): 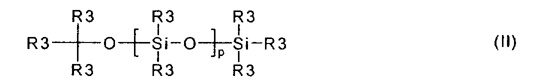 worin
- R₃: unabhängig voneinander einen gegebenenfalls fluorierten und/oder chlorierten Alkylrest mit 1 bis 4 Kohlenstoffatomen oder Phenyl; vorzugsweise Methyl, Ethyl, Propyl, 3,3,3-Trifluoropropyl, Monofluoromethyl, Difluoromethyl oder Phenyl, vorzugsweise Methyl; oder einen Rest der Formel (III): 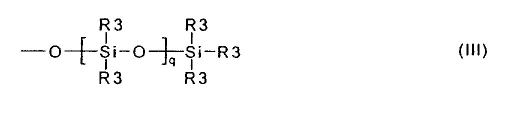
- p: Null, oder eine Zahl im Bereich von 1 bis 1000; vorzugsweise im Bereich von 2 bis 500; vorzugsweise im Bereich von 5 bis 100;
- q: Null oder eine Zahl im Bereich von 1 bis 50; und die Summe von [p+q] eine Zahl im Bereich von 1 bis 1000; vorzugsweise im Bereich von 2 bis 500; vorzugsweise 5 bis 100;
bedeuten.

Bevorzugt sind lineare Dimethylpolysiloxane, in welchen gegebenenfalls ein Teil der Methylgruppen durch Phenyl ersetzt ist. Insbesondere bevorzugt sind Polydimethylsiloxane, welche endständig mit Trimethylsiloxygruppen versehen sind.

Die Werte p, q und [p+q] in den niedermolekularen linearen oder verzweigten Organopolysiloxanen und deren Gemischen, bzw. in den Verbindungen der Formel (II) und deren Gemischen, sind so bemessen, dass deren Viskosität im Bereich von etwa 0.25 cSt bis etwa 20'000 cSt, vorzugsweise im Bereich von etwa 1 cSt bis etwa 5'000 cSt und vorzugsweise im Bereich von etwa 2 cSt bis etwa 200 cSt, liegt, gemessen gemäss DIN 53 019 bei 20°C.

Die erfindungsgemässe Silikonharzmasse enthält in gleichmässiger Verteilung, wie bereits beschrieben, mindestens ein niedermolekulares lineares oder verzweigtes Organopolysiloxan, oder ein Gemisch solcher Organopolysiloxane, in einer wirksamen Konzentration. Diese "wirksame Konzentration" ist je nach Anwendung verschieden und für den Fachmann leicht zu ermitteln und liegt in der Regel im Bereich von etwa 0.5 Gew.-% bis 15 Gew.-%, vorzugsweise im Bereich von etwa 2 Gew.-% bis 10 Gew.-%, vorzugsweise im Bereich von 5 Gew.-% bis 10 Gew.-%, und insbesondere im Bereich von 6 Gew.-% bis 9 Gew.-%, bezogen auf das Gesamtgewicht der erfindungsgemässen Silikonharzmasse.

Die erfindungsgemässen Vergussmassen stellt man her, indem man das vorgehend beschriebene niedermolekulare lineare oder verzweigtes Organopolysiloxan, oder ein Gemisch solcher Organopolysiloxane, in das härtbare flüssige oder pastöse Matrixmaterial an einer beliebigen Stufe der Herstellung, einrührt. Hierzu verwendet man mit Vorteil einen geeigneten Kneter oder einen Extruder.

In diesem Sinne betrifft die vorliegende Erfindung ein Verfahren zur Herstellung einer härtbaren flüssigen oder pastösen Silikonharzmasse, welche geeignet ist für die Herstellung von selbst heilenden elektrischen Isolierungen, welches dadurch gekennzeichnet ist, dass man in eine härtbare flüssige oder pastöse Silikonharzmasse, welche geeignet ist für die Herstellung von elektrischen Isolierungen, in gleichmässiger Verteilung mindestens ein niedermolekulares lineares oder verzweigtes Organopolysiloxan, oder ein Gemisch solcher Organopolysiloxane, in einer wirksamen Konzentration, an einer beliebigen Stufe der Herstellung, einarbeitet.

Die erfindungsgemässen härtbaren flüssigen oder pastösen Silikonharzmassen bzw. Vergussmassen werden insbesondere für die Herstellung von Hochspannungsisolierungen für den Freilufteinsatz verwendet, insbesondere für die Herstellung von Freiluftisolatoren bei Hochspannungsleitungen als Langstab-, Verbund- und Kappenisolatoren sowie für Stützisolatoren im Mittelspannungsbereich. Die erfindungsgemässen Vergussmassen können auch in der Herstellung von Isolierungen bei Freiluft-Leistungschaltern, Messwandlern, Durchführungen und Ableitern, im Schaltanlagenbau, in Leistungsschaltern, Trockentransformatoren und elektrischen Maschinen, Verwendung finden. Im weiteren können die erfindungsgemässen Vergussmassen auch als Beschichtungsmaterialien für Transistoren und andere Halbleiterelemente und ganz allgemein zum Imprägnieren von elektrischen Bauteile verwendet werden.

Dabei wird das Formteil in einem Schritt oder in zwei oder mehreren Schritten hergestellt bzw. gegossen. So kann man zuerst einen Kern giessen, dessen Material beispielsweise aus Glas, Keramik oder einem Verbundwerkstoff besteht. In einem zweiten Schritt wird dann die fertige Form hergestellt, indem der Kern mit der erfindungsgemässen härtbaren flüssigen oder pastösen Silikonharzmasse bzw. Vergussmasse überzogen wird. So ist es beispielsweise möglich, die erfindungsgemässe Vergussmasse auf einen Kern anzugiessen, wobei der Kern mit der gehärteten Vergussmasse keine chemische Bindung eingeht, dass aber aufgrund des Schrumpfdruckes des gehärteten Vergussmaterials eine genügend starke mechanisch Verbindung zwischen dem Kern und dem angegossenen Teil entsteht. In diesem Verfahren kann man auch Haftvermittler, sog. Primer, verwenden, mit welchen eine chemische Bindung zwischen dem Kern und der Vergussmasse erhalten wird. Solche Verfahren sowie auch die Härtungsbedingungen sind an sich bekannt. So härtet man bei Verwendung eines Peroxids Temperaturen im Bereich von etwa 130°C bis etwa 200°C und bei Reaktionen von Hydrosilanbindungen mit organischen Doppelbindungen Temperaturen im Bereich von etwa 70°C bis 200°C. Die folgenden Beispiel erläutern die Erfindung.

### Beispiel 1

Eine Silikonharzmasse, welche geeignet ist für die Herstellung von elektrischen Hochspannungsisolierungen (Silopren® Electro 230 der Firma GE-Bayer Silicones, Deutschland), bestehend aus zwei miteinander additionsvernetzenden Silikonkautschuk Komponenten, wobei die eine Komponente Si-H-Gruppen und die andere Komponente Si-Vinyl-Gruppen aufweist, wird in einem Rührapparat (Flügelrührer mit Mischaggregat Eurostar von IKA) vorgelegt. Nun wird ein lineares Polydimethylsiloxan, welches endständig mit Trimethylsiloxygruppen versehen ist, in die vorgelegte Silikonharzmasse in einer Menge von 7.5 Gew.-%, bezogen auf die vorgelegte Silikonharzmasse, bis zur gleichmässigen Verteilung eingearbeitet. Das lineare Polydimethylsiloxan hat eine Viskosität von 5 cSt (bei 25°C) und ein durchschnittliches Molekulargewicht von 770 g/mol (Produkt DMS-T05, Vertrieb ACBR, Karlsruhe, Deutschland). Anschliessend wird die erfindungsgemäss veränderte Silikonharzmasse in eine Heizpresse zu 4 mm dicke Platten in einer Stahlform bei einer Temperatur von 120°C, während 90 Minuten vulkanisiert.

Durch gekoppelte Gaschromatographie-Massenspektroskopie (GC-MS) konnte an den unter industriellen Fertigungsbedingungen ausgehärteten Platten exakt die zugemischte Menge (7.5 Gew.-%) des linearen Polydimethylsiloxans wieder gefunden werden. Es stellte sich somit ein stabiler Zustand ein, ohne dass es zu einem Ausschwitzen des linearen Polydimethylsiloxans gekommen wäre.

In einem Vergleichsversuch wurde auch ein vergleichbares cyklisches Polydimethylsiloxan (Octamethylcyclotetrasiloxan) eingesetzt. Hier wurde von den zugesetzten 7.5 Gew.-% nur 0.48 ± 0.13 Gew.-% wieder gefunden. Das übrige cyklische Polydimethylsiloxan ging im Fertigungsprozess verloren, bzw. wurde "ausgeschwitzt".

### Beispiel 2 (Prüfung der Alterung)

Die gemäss Beispiel 1 vulkanisierte erfindungsgemäss selbst heilende Silikonharzmasse wurde einer beschleunigten Alterung im Labor unter Anwendung einer Korona-Entladung auf der Silikonoberfläche ausgesetzt. Nach erfolgter Corona-Alterung wurde eine deutliche Beschleunigung der Hydrophobieerholung, messbar auf Grund eines schnelleren Anstiegs des dynamischen Kontaktwinkels von Wasser, festgestellt. Dieser Effekt blieb auch nach jeweils fünf und zehn unabhängig durchgeführten Alterungszyklen zeitstabil. Weiterhin zeichnete sich die Silikonoberfläche durch eine erheblich beschleunigte Hydrophobieerholung direkt nach Beendigung der Alterung aus (höherer Vorrückwinkel nach Erholzeit von 0.1 Stunden bzw. 6 Minuten). Die Testresultate sind in Tabelle 1 wieder gegeben.

**Tabelle 1**

| | Ohne Alterung** | Erholung nach 5 Std.** | Erholung nach 12 Std. ** | Erholung nach 24 Std. ** |
|---|---|---|---|---|
| Vergleichsversuch (ohne Zusatz*) | 98° | 65° | 77° | 90° |
| Nach 1. Corona-Alterung | 105° | 92° | 93° | 101° |
| Nach 5. Corona-Alterung | 105° | 90° | 94° | 98° |
| Nach 10. Corona-Alterung | 105° | 89° | 92° | 98° |

| | | | | |
|---|---|---|---|---|
| * ohne Zusatz eines linearen Polydimethylpolysiloxans | | | | |
| ** Dynamischer Kontaktwinkel (Fortschreitwinkel) | | | | |

## Patentansprüche

1. Härtbare flüssige oder pastöse Silikonharzmasse, welche für die Herstellung von selbst heilenden elektrischen Isolierungen geeignet ist, **dadurch gekennzeichnet, dass** diese in gleichmässiger Verteilung mindestens ein niedermolekulares lineares oder verzweigtes Organopolysiloxan, oder ein Gemisch solcher Organopolysiloxane, in einer wirksamen Konzentration enthält.

2. Silikonharzmasse nach Anspruch 1, **dadurch gekennzeichnet, dass** diese mindestens ein härtbares Silikonpolymer oder ein Gemisch solcher Polymere, ein Füllmaterial, ein Mittel für die Vernetzung bzw. Härtung der flüssigen oder pastösen Silikonharzmasse, sowie gegebenenfalls weitere Zusatzstoffe enthält, welche ausgewählt sind aus der Gruppe der Fliesshilfsmittel, Flammschutzmittel, Farbstoffe bzw. Pigmente.

3. Silikonharzmasse nach Anspruch 1 oder 2, **dadurch gekennzeichnet, dass** das Silikonpolymer eine Verbindung bzw. ein Verbindungsgemisch, der allgemeinen Formel (I): 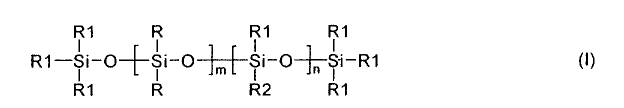 darstellt, worin
R unabhängig voneinander einen gegebenenfalls chlorierten und/oder fluorierten Alkylrest mit 1 bis 4 Kohlenstoffatomen oder Phenyl; vorzugsweise Methyl, Ethyl, Propyl, 3,3,3-Trifluoropropyl, Monofluoromethyl, oder Difluoromethyl; vorzugsweise Methyl;
R₁ unabhängig voneinander eine der Bedeutungen von R oder R₂, oder -O-Alkyl(C₁-C₄) oder Hydroxyl;
R₂ unabhängig voneinander eine der Bedeutungen von R, oder Wasserstoff, oder einen Rest -(A)ᵣ-CH=CH₂;
A einen Rest -CₛH₂ₛ-, vorzugsweise -(CH₂)ₛ-, worin
s eine ganze Zahl von 1 bis 3, vorzugsweise 1;
r Null oder eins;
m eine Zahl im Bereich von 500 bis 20'000, vorzugsweise im Bereich von 1000 bis 15'000, vorzugsweise im Bereich von 4'000 bis 10'000;
n eine Zahl im Bereich von Null bis 500, vorzugsweise im Bereich von Null oder im Bereich von 2 bis 100, vorzugsweise Null oder eine Zahl im Bereich von 2 bis 20;
bedeuten, wobei die Gruppen -[Si(R)(R)O]- und -[Si(R₁)(R₂)O]- in beliebiger Reihenfolge im Molekül angeordnet sind.

4. Silikonharzmasse nach einem der Ansprüche 1-3, **dadurch gekennzeichnet, dass** diese als Mittel für die Vernetzung bzw. Härtung der Silikonharzmasse mindestens ein Trialkoxysilan der Formel [(C₁-C₄)Alkyl]Si[O-Alkyl(C₁-C₄)], vorzugsweise Methyltrimethoxysilan, Methyltriethoxysilan und verwandte Verbindungen; eine Verbindung der Formel [(C₂-C₄)Alkenyl]Si[O-Alkyl(C₁-C₄)], vorzugsweise Vinyltrimethoysilan oder Allyltrimethoysilan; (Phenyl)Si[O-Alkyl(C₁-C₄)] oder Silane der Formel [(C₁-C₄)Alkyl]SiH₃ oder verwandte niedermolekulare Hydrogensiloxane; und/oder ein Peroxid, vorzugsweise ein Diacylperoxid oder ein Dialkylperoxid, enthält.

5. Silikonharzmasse nach Anspruch 3, **dadurch gekennzeichnet, dass** mindestens ein Teil der Substituenten R₁ entweder -O-Alkyl(C₁-C₄) oder Hydroxyl oder -(A)ᵣ-CH=CH₂ bedeutet.

6. Silikonharzmasse nach Anspruch 5, **dadurch gekennzeichnet, dass** R₂ sowohl Wasserstoff als auch -A-CH=CH₂ bedeutet, wobei R₂ pro Molekül nur entweder Wasserstoff oder -A-CH=CH₂ bedeutet, wobei diese Silikonharzmasse vorzugsweise zusätzlich eine katalytisch wirksame Komplexverbindung aus der Gruppe der Rhodium-, Nickel-, Palladium- und/oder Platinmetalle, in Mengen von vorzugsweise 1 bis 100 ppm bezogen auf gebundenes Platin, enthält.

7. Silikonharzmasse nach einem der Ansprüche 1-6, **dadurch gekennzeichnet, dass** die organischen an Silizium gebundenen Substituenten im niedermolekularen linearen oder verzweigten Organopolysiloxan, gegebenenfalls fluoriertes und/oder chloriertes (C₁-C₄)Alkyl oder Phenyl; vorzugsweise Methyl, Ethyl, Propyl, 3,3,3-Trifluoropropyl, Monofluoromethyl, Difluoromethyl oder Phenyl, vorzugsweise Methyl, bedeuten.

8. Silikonharzmasse nach einem der Ansprüche 1-7, **dadurch gekennzeichnet, dass** das niedermolekulare lineare oder verzweigte Organopolysiloxan eine Verbindung, bzw. ein Verbindungsgemisch, der allgemeinen Formel (II): 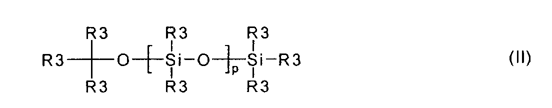 darstellt, worin
R₃ unabhängig voneinander einen gegebenenfalls fluorierten und/oder chlorierten Alkylrest mit 1 bis 4 Kohlenstoffatomen oder Phenyl; vorzugsweise Methyl, Ethyl, Propyl, 3,3,3-Trifluoropropyl, Monofluoromethyl, Difluoromethyl oder Phenyl, vorzugsweise Methyl; oder einen Rest der Formel (III): 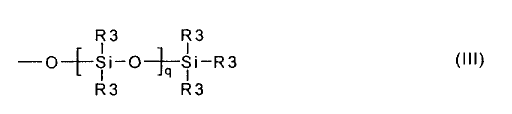
p Null, oder eine Zahl im Bereich von 1 bis 1000; vorzugsweise im Bereich von 2 bis 500; vorzugsweise im Bereich von 5 bis 100;
q Null oder eine Zahl im Bereich von 1 bis 50; und die Summe von [p+q] eine Zahl im Bereich von 1 bis 1000; vorzugsweise im Bereich von 2 bis 500; vorzugsweise 5 bis 100;
bedeuten.

9. Silikonharzmasse nach Anspruch 8, **dadurch gekennzeichnet, dass** das niedermolekulare Organopolysiloxan ein lineares Dimethylsiloxan mit endständigen Trimethylsiloxygruppen darstellt, worin gegebenenfalls ein Teil der Methylgruppen durch Phenyl ersetzt ist.

10. Silikonharzmasse nach einem der Ansprüche 1-9, **dadurch gekennzeichnet, dass** das niedermolekulare Organopolysiloxan und deren Gemische eine Viskosität im Bereich von etwa 0.25 cSt bis etwa 20'000 cSt, vorzugsweise im Bereich von etwa 1 cSt bis etwa 5'000 cSt und vorzugsweise im Bereich von etwa 2 cSt bis etwa 200 cSt, aufweisen, gemessen gemäss DIN 53 019 bei 20°C.

11. Silikonharzmasse nach einem der Ansprüche 1-10, **dadurch gekennzeichnet, dass** die Konzentration des niedermolekularen Organopolysiloxans, oder des Gemisches solcher Organopolysiloxane, im Bereich von etwa 0.5 Gew.-% bis 15 Gew.-%, vorzugsweise im Bereich von etwa 2 Gew.-% bis 10 Gew.-%, vorzugsweise im Bereich von 5 Gew.-% bis 10 Gew.-%, und insbesondere im Bereich von 6 Gew.-% bis 9 Gew.-%, bezogen auf das Gesamtgewicht der erfindungsgemässen Silikonharzmasse, liegt.

12. Verfahren zur Herstellung einer härtbaren flüssigen oder pastösen Silikonharzmasse nach einem der Ansprüche 1-11, **dadurch gekennzeichnet, dass** man in eine härtbare flüssige oder pastöse Silikonharzmasse, welche geeignet ist für die Herstellung von elektrischen Isolierungen, in gleichmässiger Verteilung mindestens ein niedermolekulares lineares oder verzweigtes Organopolysiloxan gemäss einem der Ansprüche 7-11, oder ein Gemisch solcher Organopolysiloxane, in einer wirksamen Konzentration, an einer beliebigen Stufe der Herstellung, einarbeitet.

13. Verwendung der härtbaren Silikonharzmassen nach einem der Ansprüche 1-11 für die Herstellung von Formteilen und Beschichtungen auf dem Gebiet der elektrischen Isolierungen, vorzugsweise von Hochspannungsisolierungen für den Freilufteinsatz, vorzugsweise von Freiluftisolatoren bei Hochspannungsleitungen als Langstab-, Verbund- und Kappenisolatoren; von Stützisolatoren im Mittelspannungsbereich; von Isolierungen bei Freiluft-Leistungschaltern, Messwandlern, Durchführungen und Ableitern, im Schaltanlagenbau, in Leistungsschaltern, von Trockentransformatoren und elektrischen Maschinen; als Beschichtungsmaterialien für Transistoren und andere Halbleiterelemente und zum Imprägnieren von elektrischen Bauteilen.

14. Die nach Anspruch 13 hergestellten Formteile und Beschichtungen auf dem Gebiet der elektrischen Isolierungen.

15. Verfahren zur Herstellung einer Silikonharzmasse nach einem der Ansprüche 1-11, **dadurch gekennzeichnet, dass** man in eine härtbare flüssige oder pastöse Silikonharzmasse, welche geeignet ist für die Herstellung von elektrischen Isolierungen, in gleichmässiger Verteilung mindestens ein niedermolekulares lineares oder verzweigtes Organopolysiloxan nach einem der Ansprüche 7-11, oder ein Gemisch solcher Organopolysiloxane, in einer wirksamen Konzentration, an einer beliebigen Stufe der Herstellung, einarbeitet.
